# NEUE EUROPÄISCHE PATENTSCHRIFT

(11) **EP 2 368 691 B2**
(45) Veröffentlichungstag und Bekanntmachung des Hinweises auf die Entscheidung über den Einspruch: **31.08.2022**
(45) Hinweis auf die Patenterteilung: 21.08.2019
(21) Anmeldenummer: 11151419.6
(22) Anmeldetag: 19.01.2011
(51) Int. Cl.: B29C 49/36, B29C 49/42, B29C 49/06, B29C 49/64, B29C 49/00, B29C 49/28, B29K 67/00, B29L 31/00

(54) **Verfahren zum Herstellen von Kunststoffbehältern und Blasmaschine dafür**
Method for manufacturing plastic containers and apparatus therefore
Procédé de fabrication de récipients en matière synthétique et dispositif pour realiser le procéde

(30) Priorität: 26.03.2010 DE 102010003350
(43) Veröffentlichungstag der Anmeldung: 28.09.2011
(73) Patentinhaber: Krones AG, 93073 Neutraubling (DE)
(72) Erfinder: Senn, Konrad, 93059 Regensburg (DE); Winzinger, Frank, 85354 Freising (DE); Aust, Robert, 93092 Barbing (DE)
(74) Vertreter: Grünecker Patent- und Rechtsanwälte PartG mbB

(56) Entgegenhaltungen:
- EP-A1- 0 317 644
- EP-A1- 1 529 621
- EP-A1- 1 559 530
- EP-A2- 1 002 635
- EP-A2- 2 098 356
- EP-A2- 2 108 501
- EP-A2- 2 108 928
- EP-B1- 2 303 546
- WO-A1-2009/109777
- WO-A1-2009/141216
- WO-A1-2010/020530
- WO-A2-97/04944
- CA-A1- 2 203 042
- DE-A1- 19 615 798
- DE-A1- 19 958 435
- DE-A1-102006 004 940
- DE-A1-102006 053 193
- DE-A1-102007 025 527
- DE-A1-102008 024 108
- DE-A1-102008 030 866
- GB-A- 1 480 647
- US-A- 4 046 498
- US-A- 5 352 402
- US-A1- 2003 222 071
- US-A1- 2005 194 705
- US-A1- 2006 097 417
- US-A1- 2009 102 083
- US-A1- 2009 108 505
- US-A1- 2009 230 124
- US-A1- 2009 261 513
- US-B1- 6 426 035
- US-B2- 6 773 251

## Beschreibung

Die Erfindung betrifft ein Verfahren zum Herstellen von Kunststoffbehältern mittels einer Blasmaschine.

Produktgebinde mit verschiedenen Produkten, beispielsweise unterschiedlichen Getränken, werden immer häufiger angeboten. Beispielsweise können sich in einem Sechserträger Getränke zwei Flaschen Orangensaft, zwei Flaschen Johannisbeersaft und zwei Flaschen Wasser befinden. Um solche Produktmischgebinde herzustellen, werden die Produkte üblicherweise einzeln auf einer Abfülllinie hergestellt, verpackt und danach zu einem Produktgebinde kommissioniert.

Die unterschiedlichen Produkte werden dabei häufig in unterschiedliche Kunststoffbehälter abgefüllt, beispielsweise in Kunststoffbehälter unterschiedlicher Farbe. Die unterschiedlichen Kunststoffbehälter werden meist mittels einer Blasmaschine in mehreren Produktionsdurchläufen hergestellt, wobei in jedem der Produktionsdurchläufe nur eine Art von Kunststoffbehälter hergestellt wird.

In der EP 1 002 635 A2 wie auch der US 6,773,251 B2 , der DE 10 2008 030 866 A1 und der DE 196 15 798 A1 werden Blasformmaschine beschrieben, die unterschiedliche Formen zum Ausbilden unterschiedlicher Kunststoffbehälter aufweisen. Die DE 10 2007 025 527 A1 offenbart ein Verfahren zum Herstellen von Behältern aus Vorformlingen, wobei die Vorformlinge mit Hilfe von Laserstrahlen selektiv erwärmt werden.

In der US 2005/0194705 A1 wird eine Blasformmaschine beschrieben, in der in einer Datenbank Betriebsparameter abgespeichert werden können, etwa Temperaturen, und diese Betriebsparameter entsprechend den erwünschten Behältnissen an die entsprechenden Maschinen übertragen werden können.

In der DE 10 2006 053 193 A1 wird eine Streckblasmaschine erwähnt, die die Möglichkeit bereitstellt, auf unterschiedliche Behälterarten umzustellen. US 2009/0261513 A1 offenbart ein Verfahren und eine Vorrichtung zur Herstellung von Kunststoffbehältnissen mit Infrarot-Absorptionsüberwachung. DE 10 2006 004 940 A1 offenbart ein Verfahren und Vorrichtung zur Blasformung von Behältern.

Aufgabe der vorliegenden Erfindung ist es, ein verbessertes Verfahren zum Herstellen von Kunststoffbehältern mittels einer Blasmaschine bereitzustellen. Diese Aufgabe wird durch ein Verfahren gemäß Patentanspruch 1 gelöst.

Insbesondere stellt die Erfindung ein Verfahren zum Herstellen von Kunststoffbehältern mittels einer Blasmaschine bereit, dadurch gekennzeichnet, dass die Blasmaschine derart betrieben wird, dass wenigstens zwei voneinander unterschiedliche Kunststoffbehälter innerhalb eines Produktionsdurchlaufs aus der Blasmaschine ausgebracht werden. Die wenigstens zwei voneinander unterschiedlichen Kunststoffbehälter werden aus Vorformlingen hergestellt, wobei eine Heizvorrichtung der Blasmaschine derart gesteuert wird, dass die Vorformlinge vor einem Blasvorgang auf unterschiedliche Temperaturen erwärmt werden.

Dadurch, dass die wenigstens zwei voneinander unterschiedlichen Kunststoffbehälter in einem Produktionsdurchlauf oder Durchgang ausgebracht werden, können Stillstandszeiten zur manuellen Umstellung der Blasmaschine von einem Behältertyp zum anderen vermieden werden.

Bei den Kunststoffbehältern kann es sich insbesondere um Kunststoffflaschen, beispielsweise um PET (Polyethylenterephthalat) Flaschen, handeln.

"In einem Produktionslauf" bedeutet in diesem Zusammenhang, dass die wenigstens zwei voneinander unterschiedlichen Kunststoffbehälter in einem Durchgang ausgebracht werden, also zwischen dem Ausbringen eines ersten Kunststoffbehälters und eines zweiten, davon unterschiedlichen, Kunststoffbehälters keine manuellen Umbauten an der Blasmaschine notwendig sind. Mit anderen Worten wird unter einem Produktionsdurchlauf eine Herstellung von mehreren Kunststoffbehältern ohne einen Stillstand der Blasmaschine zum Umrüsten der Blasmaschine verstanden.

Bei dazwischengeschaltenen Puffern und/oder bei Störungen der Blasmaschine kann es jedoch zu einem Stillstand der Blasmaschine kommen. Bei Blasmaschinen, die als Taktmaschinen betrieben werden, kann unter einem Produktionsdurchlauf auch die Produktion über mehrere Takte verstanden werden.

Die Blasmaschine kann einen Maschinenschutz umfassen, insbesondere wobei der Maschinenschutz innerhalb eines Produktionsdurchlaufs nicht geöffnet wird.

Die Kunststoffbehälter können innerhalb eines Produktionsdurchlaufs kontinuierlich von der Blasmaschine abtransportiert werden. Dies trifft insbesondere auf rundlaufende Maschinen zu.

Insbesondere können die unterschiedlichen Behälter auf demselben Transportpfad oder derselben Transportstrecke abtransportiert werden.

Die ausgebrachten Kunststoffbehälter können an ein weiteres Behandlungselement, insbesondere einen Füller, eine Etikettiervorrichtung und/oder eine Sterilisationsvorrichtung, übergeben werden.

Voneinander unterschiedlich bedeutet, dass sich die Kunststoffbehälter in wenigstens einer physikalischen, chemischen und/oder geometrischen Eigenschaft voneinander unterscheiden.

Unter dem Betreiben der Blasmaschine kann ein Steuern und/oder Einstellen und/oder Ausbilden verstanden werden.

Die wenigstens zwei voneinander unterschiedlichen Kunststoffbehälter können insbesondere wenigstens zwei voneinander unterschiedlichen Kunststoffbehältertypen entsprechen. Es können also ein oder mehrere Kunststoffbehälter eines ersten Kunststoffbehältertyps und ein oder mehrere Kunststoffbehälter wenigstens eines zweiten Kunststoffbehältertyps in einem Produktionsdurchlauf aus der Blasmaschine ausgebracht werden.

Insbesondere können aus der Blasmaschine 3, 4, 5, 6, 7, 8, 9 oder 10 oder sogar 15, 20, 24 oder 36 voneinander verschiedene Kunststoffbehälter bzw. Kunststoffbehältertypen in einem Produktionsdurchlauf ausgebracht werden.

Die wenigstens zwei voneinander unterschiedlichen Kunststoffbehälter können aus Vorformlingen, insbesondere aus wenigstens zwei voneinander unterschiedlichen Vorformlingen oder aus gleichartigen Vorformlingen, hergestellt werden. Die Vorformlinge, auch Preforms genannt, können einen Kunststoff, insbesondere PET, umfassen.

Das Verfahren zum Herstellen von Kunststoffbehältern kann außerdem ein Zuführen der Vorformlinge umfassen.

Die Blasmaschine kann einer Herstellungsmaschine zum Herstellen von Kunststoffbehältern entsprechen. Die Blasmaschine kann insbesondere eine Heizvorrichtung und eine Blasformmaschine umfassen. Das Verfahren kann ein thermisches Konditionieren der Vorformlinge in der Heizvorrichtung und/oder eine Expansion der Vorformlinge in der Blasformmaschine umfassen. Das thermische Konditionieren kann insbesondere ein Erwärmen und/oder Abkühlen der Vorformlinge umfassen.

Die Blasmaschine kann auch einer Spritzgießmaschine zum Spritzgießen von Kunststoffbehältern in einer oder mehreren Endformen oder einer Formpressmaschine zum Formpressen der Kunststoffbehälter entsprechen.

Die wenigstens zwei voneinander unterschiedlichen Kunststoffbehälter und/oder voneinander unterschiedlichen Vorformlinge unterscheiden sich in einer oder in mehreren physikalischen, chemischen und/oder geometrischen Eigenschaften voneinander. Insbesondere können die Kunststoffbehälter und/oder Vorformlinge unterschiedliche geometrische Eigenschaften, beispielsweise unterschiedliche Größen, Neckdurchmesser und/oder Längen aufweisen. Die unterschiedlichen Kunststoffbehälter und/oder Vorformlinge können sich auch in optischen Eigenschaften, beispielsweise Farbe und/oder Transparenz, und/oder im Material, insbesondere in der Materialzusammensetzung, unterscheiden. Beispielsweise können die unterschiedlichen Kunststoffbehälter und/oder Vorformlinge unterschiedliche Mengen eines Infrarotabsorptionsmaterials beinhalten.

Die unterschiedlichen Kunststoffbehälter und/oder Vorformlinge können auch unterschiedliche Gewinde für verschiedene Verschlüsse aufweisen.

Die unterschiedlichen Kunststoffbehälter und/oder Vorformlinge können auch unterschiedliche Positionen für Indikatoren für die Anbringung verschiedener oder gleichartiger Verschlüsse aufweisen. Als Indikator kann beispielsweise eine Kerbe oder eine Ausbuchtung am Rand eines Tragrings der Kunststoffbehälter und/oder Vorformlinge dienen.

Die unterschiedlichen Kunststoffbehälter und/oder Vorformlinge können auch unterschiedliche Materialien umfassen oder aus unterschiedlichen Materialen bestehen. Beispielsweise können auf der Blasmaschine gleichzeitig Kunststoffbehälter aus PET und PP (Polypropylen) produziert werden. Denkbar wären auch andere Kombinationen aus PET, PP, PS (Polystyrol), PLA (Polyvinylalkohol) und/oder anders gearteten Kunststoffen.

Die wenigstens zwei unterschiedlichen Kunststoffbehälter und/oder Vorformlinge können auch ein unterschiedliches Gewicht, eine unterschiedliche Stabilität und/oder eine unterschiedliche Beschichtung aufweisen. Insbesondere kann ein zusätzliches Beschichtungsmodul, insbesondere vor der Blasformmaschine, beispielsweise einem Blasrad, vorgesehen sein.

Die wenigstens zwei unterschiedlichen Kunststoffbehälter und/oder die Vorformlinge können innerhalb der Blasmaschine jeweils mit mindestens einem Behandlungsparameter behandelt werden, wobei der mindestens eine Behandlungsparameter für die mindestens zwei unterschiedlichen Kunststoffbehälter und/oder die Vorformlinge unterschiedlich ist und/oder einen unterschiedlichen Wert aufweist.

In einer Blasmaschine können die Vorformlinge in einem ersten Schritt erwärmt, und in einem zweiten Schritt mittels eines Blasvorgangs, insbesondere eines Streckblasvorgangs, zu den gewünschten Kunststoffbehältern ausgeformt werden.

Das Erwärmen der Vorformlinge kann in einer Heizvorrichtung der Blasmaschine durchgeführt werden.

Insbesondere können für voneinander unterschiedliche Vorformlinge unterschiedliche Temperaturen für den Blasvorgang, insbesondere den Streckblasvorgang, gewählt werden. Die Heizvorrichtung der Blasmaschine kann insbesondere derart betrieben werden, dass die Vorformlinge auf unterschiedliche Temperaturen in unterschiedlichen Bereichen einer Längsachse und/oder in unterschiedlichen Bereichen in axialer Richtung der Vorformlinge erwärmt werden können.

Bei der Heizvorrichtung der Blasmaschine kann es sich beispielsweise um einen herkömmlichen stationären, linearen oder rundlaufenden Ofen handeln. Insbesondere kann die Heizvorrichtung Heizelemente umfassen, insbesondere wobei jedes Heizelement für die Konditionierung aller Vorformlinge dient, oder einzelnen Vorformlingen individuell zugeordnete Kavitäten, insbesondere Heiztaschen oder, bei Mikrowellenöfen, Resonatoren, aufweist. In den Kavitäten eines Mikrowellenofens oder eines Ofens mit Heiztaschen wird eine geringe Anzahl von Vorformlingen, meistens einer, einzeln temperiert.

Im Falle eines Einstufenprozesses, also wenn die Vorformlinge mittels Spritzgießens hergestellt und noch vom Spritzgießvorgang erwärmt an die Heizvorrichtung der Blasmaschine übergeben werden, können die Vorformlinge in der Heizvorrichtung gekühlt werden.

Die wenigstens zwei voneinander unterschiedlichen Kunststoffbehälter können auch in einer oder in mehreren Endformen, insbesondere in voneinander unterschiedlichen Endformen, spritzgegossen werden. In diesem Fall kann auf die Verfahrensschritte, in denen Vorformlinge zugeführt, konditioniert und zu Kunststoffbehältern expandiert werden, verzichtet werden.

Die Blasmaschine kann unterschiedliche Behandlungseinheiten umfassen. Die Behandlungseinheiten können beispielsweise Heizelemente und/oder Blasstationen sein.

Die Vorformlinge können unterschiedlichen Behandlungseinheiten zugeordnet werden. Mit anderen Worten kann die Blasmaschine derart gesteuert werden, dass wenigstens zwei Vorformlinge unterschiedlichen Behandlungseinheiten zugeordnet werden, insbesondere derart, dass wenigstens zwei voneinander unterschiedliche Kunststoffbehälter in einem Produktionsdurchlauf ausgebracht werden.

Die Blasmaschine kann wenigstens zwei Blasstationen umfassen, wobei die Blasmaschine derart gesteuert wird, dass die Vorformlinge unterschiedlichen Blasstationen zugeordnet werden. Die Blasstationen können sich dabei in verschiedenen Behandlungsparametern wie der Geometrie der Blasform, den verwendeten Reckparametern und/oder den verwendeten Blasparametern, beispielsweise Vorblasdruck, Fertigblasdruck, Spülzeit und/oder Schaltzeitpunkte für die jeweiligen Drücke unterscheiden.

Eine Heizvorrichtung, insbesondere Heizelemente der Heizvorrichtung, können derart gesteuert und/oder ausgebildet sein, dass ein Vorformling mit einem vorherbestimmten Heizprofil oder Temperaturprofil versehen werden kann ("preferential heating"). Insbesondere können zwei Vorformlinge mit unterschiedlichen Temperaturprofilen versehen werden. Beispielsweise können die Vorformlinge in Umfangsrichtung und/oder in Längsrichtung mit einem Temperaturprofil versehen werden. Mit anderen Worten kann die Temperatur an einer oder mehreren vorherbestimmten Stellen oder Bereichen eines Vorformlings gesteuert werden.

Wenigstens zwei Vorformlinge können in der Heizvorrichtung unter Verwendung voneinander unterschiedlicher Behandlungsparameterwerte behandelt werden. Die Behandlungsparameter der Heizvorrichtung, insbesondere der Heizelemente der Heizvorrichtung, können eine Drehgeschwindigkeit der Vorformlinge, eine eingebrachte Wärme pro zu erwärmenden Bereich (Schicht oder Längsbereich (preferential heating)), einen Abstand zu einem Heizstrahler, eine Durchlaufgeschwindigkeit durch die Heizvorrichtung, eine Abschirmzeit bestimmter Bereiche eines Vorformlings, eine Abschirmposition, eine Wellenlänge der Strahlung, eine Strahlungsart und/oder eine Feldstärke einer Mikrowellenstrahlung umfassen.

Die Vorformlinge können in einer vorherbestimmten Reihenfolge in die Blasmaschine eingebracht werden. Insbesondere voneinander unterschiedliche Vorformlinge können dann auf einfache Weise den entsprechenden, insbesondere unterschiedlichen, Behandlungseinheiten der Blasmaschine zugeführt werden.

Dadurch, dass die Vorformlinge wenigstens teilweise auf unterschiedlichen Transportstrecken durch die Blasmaschine bewegt werden, können insbesondere voneinander unterschiedliche Vorformlinge auf unterschiedliche Weise bearbeitet werden. Beispielsweise kann ein erster Vorformling auf einer ersten Transportstrecke durch eine Heizvorrichtung der Blasmaschine bewegt werden, während ein zweiter Vorformling auf einer zweiten, von der ersten Transportstrecke unterschiedlichen, Transportstrecke durch die Heizvorrichtung bewegt wird. Die unterschiedlichen Transportstrecken können insbesondere unterschiedlich lang ausgebildet sein. Dadurch kann eine unterschiedliche Heizzeit für die Vorformlinge erreicht werden. Die unterschiedlichen Transportstrecken können die unterschiedlichen Vorformlinge auch an unterschiedlichen Heizelementen, insbesondere an unterschiedlich ausgebildeten und/oder gesteuerten Heizelementen, vorbeibewegen, so dass diese unterschiedlich erwärmt werden.

Zusätzlich werden die Vorformlinge auch unterschiedlich schnell durch die Blasmaschine, insbesondere durch eine Heizvorrichtung der Blasmaschine, bewegt.

Die Heizvorrichtung der Blasmaschine kann außerdem wenigstens eine Abschirmvorrichtung umfassen. Damit können Teile eines Vorformlings, insbesondere die Gewinde oder sogenannte Mündungsbereiche, von der Wärmezufuhr geschützt, und damit nicht oder in geringerem Ausmaß erwärmt werden. Die wenigstens eine Abschirmvorrichtung kann mit dem Vorformling durch die Heizvorrichtung bewegt werden. Die Abschirmvorrichtung kann auch für eine Abschirmung bestimmter Bereiche der Vorformlinge in der Umfangsrichtung verwendet werden.

Die Abschirmvorrichtung kann für unterschiedliche Vorformlinge unterschiedlich betrieben, insbesondere gesteuert, werden. Beispielsweise kann der Zeitpunkt des Hebens und/oder Senkens der Abschirmvorrichtung für unterschiedliche Vorformlinge unterschiedlich gewählt werden. Auch die Ausrichtung der Abschirmplatte, z.B. in Umfangsrichtung der Vorformlinge, kann entsprechend gewählt werden.

Das Verfahren zum Herstellen von Kunststoffbehältern umfasst ein automatisches Erkennen von, insbesondere unterschiedlichen, Vorformlingen. Auf diese Weise können die Vorformlinge auf einfache Weise selektiv zur richtigen Behandlungseinheit der Blasmaschine zugeführt werden. Das automatische Erkennen kann ein Erfassen einer chemischen und/oder geometrischen Eigenschaft eines Vorformlings umfassen.

Insbesondere kann wenigstens ein erkannter Vorformling automatisch, beispielsweise über eine oder mehrere Weichen, wenigstens einer Behandlungseinheit zugeordnet werden.

Der Wert wenigstens eines Behandlungsparameters wird entsprechend dem erkannten Vorformling gewählt, und die Blasmaschine wird derart betrieben, dass der erkannte Vorformling in der Blasmaschine mit dem gewählten Behandlungsparameterwert behandelt wird.

Die wenigstens eine Behandlungseinheit kann einem Transportdorn, einer Transportklammer, einem Innen- und/oder Außengreifer, einer Blasform, einem Heizelement, einer Sterilisationsdüse, einer Sortiereinheit und/oder einer Fördereinrichtung zum Fördern der Kunststoffbehälter und/oder Vorformlinge entsprechen.

Der wenigstens eine Behandlungsparameter kann der Geometrie der Blasform, einem verwendeten Reckparameter und/oder Blasparameter, beispielsweise einem Vorblasdruck, einem Fertigblasdruck, einer Spülzeit und/oder einem Schaltzeitpunkt für die jeweiligen Drücke, entsprechen.

Die automatische Erkennung der Vorformlinge kann beispielsweise optisch, insbesondere durch eine Kamera, durchgeführt werden. Die automatische Erkennung der Vorformlinge kann beispielsweise in einem Gerät, das zur Messung des Infrarotabsorptionsgrads vorgesehen ist, integriert sein.

Die unterschiedlichen Vorformlinge können basierend auf einem Ergebnis des automatischen Erkennens in die Blasmaschine eingebracht werden.

Beispielsweise können die Vorformlinge einer Schütte entnommen und einer Sortiereinheit zugeführt werden, in welcher die Vorformlinge mittels automatischen Erkennens sortiert und daraufhin, insbesondere in einer vorherbestimmten Reihenfolge, in die Blasmaschine eingebracht werden.

Das Verfahren zum Herstellen der Kunststoffbehälter kann außerdem ein Herstellen der Vorformlinge, insbesondere durch Spritzgießen oder durch Formpressen, umfassen. Beispielsweise kann die Herstellung der Kunststoffbehälter also in einer Spritzblasmaschine stattfinden. Das kombinierte Spritzblasen hat den Vorteil, dass die Wärme, die vom Spritzgießen noch im Vorformling vorhanden ist, erhalten werden kann. Nach dem Spritzgießen kann der Vorformling durch gezieltes Kühlen und/oder Heizen profiliert werden.

Ein Spritzmodul der Spritzblasmaschine kann insbesondere derart betrieben werden, dass voneinander unterschiedliche Vorformlinge hergestellt werden können. Beispielsweise kann das Spritzmodul derart ausgebildet sein, dass wenigstens zwei voneinander unterschiedliche Vorformlinge in unterschiedlichen Formen spritzgegossen werden können. Alternativ oder zusätzlich können mehrere Spritzmodule vorgesehen sein, wobei jedes Spritzmodul einen Typ oder eine Sorte Vorformling erzeugt, wobei sich die Vorformlinge von wenigstens zwei Spritzmodulen voneinander unterscheiden.

Die Menge eines in den Vorformling eingebrachten Infrarotabsorbers kann in einem oder mehreren Spritzmodulen gesteuert werden. Beispielsweise können wenigstens zwei voneinander unterschiedliche Vorformlinge hergestellt werden, wobei sich die Menge und/oder die Profilierung eines Infrarotabsorbers in den wenigstens zwei voneinander unterschiedlichen Vorformlingen voneinander unterscheiden.

Im Falle einer Herstellung durch Formpressen kann die Menge an Kunststoff, die von einem Extruder abgegeben wird, gesteuert werden, um wenigstens zwei voneinander unterschiedliche Vorformlinge herzustellen.

Das Verfahren zum Herstellen der Kunststoffbehälter kann außerdem ein Sterilisieren der Vorformlinge umfassen, insbesondere wobei sich der Sterilisationsprozess für unterschiedliche Vorformlinge unterscheidet. sein.

Die Erfindung stellt ein Verfahren zum Herstellen von Kunststoffbehältern mittels einer Blasmaschine bereit, umfassend ein automatisches Erkennen unterschiedlicher Vorformlinge.

Die Erfindung stellt insbesondere ein Verfahren zum Herstellen von Kunststoffbehältern mittels einer Blasmaschine bereit, umfassend Erfassen eines Vorformlings, der in die Blasmaschine eingebracht wird, Bestimmen, ob der Vorformling für die Bearbeitung in der Blasmaschine geeignet ist und, wenn bestimmt wird, dass der Vorformling nicht für die Bearbeitung in der Blasmaschine geeignet ist, Anhalten der Produktion von Kunststoffbehältern; und/oder Ausgeben einer Warnmeldung, insbesondere an eine Bedienperson und/oder Auswerfen des Vorformlings und, wenn bestimmt wird, dass der Vorformling für die Bearbeitung in der Blasmaschine geeignet ist, Erzeugen eines Signals an eine Steuerungseinrichtung der Blasmaschine, dass die Bearbeitung des Vorformlings in der Blasmaschine stattfinden kann und/oder Festlegen mindestens eines Behandlungsparameters in der Blasmaschine mit dem der Vorformling behandelt wird.

Wenn bestimmt wird, dass der Vorformling nicht für die Bearbeitung in der Blasmaschine geeignet ist, kann außerdem eine, insbesondere automatische, Umstellung eines Behandlungsparameters in der Steuerung für eine oder mehrere Behandlungsstationen durchgeführt werden.

Die automatische Erkennung der Vorformlinge kann beispielsweise optisch, insbesondere durch eine Kamera, durchgeführt werden. Die automatische Erkennung der Vorformlinge kann beispielsweise in einem Gerät, das zur Messung des Infrarotabsorptionsgrads vorgesehen ist, integriert sein.

Bei den oben beschriebenen Verfahren und/oder Blasmaschinen kann jedes Heizelement der Heizvorrichtung wenigstens einer Blasstation zugeordnet sein. Mit anderen Worten kann ein Vorformling, der durch ein Heizelement thermisch konditioniert wurde, einer der wenigstens einen dem Heizelement zugeordneten Blasstation zugeführt werden. Insbesondere können mehrere Heizstationen derselben Blasstation zugeordnet sein.

Die Zuordnung der Heizelemente zu den Blasstationen kann zeitlich variabel sein. Bei einem Wechsel der Zuordnung können ein oder mehrere Behandlungsparameter der Blasstation und/oder des Heizelementes verändert werden.

Oben beschriebene Blasmaschinen können auch derart betrieben werden, dass nur eine Art von Kunststoffbehältern ausgebracht wird. In diesem Fall kann die Leistung der Blasmaschine reduziert werden. Beispielsweise kann in diesem Fall nur ein vorherbestimmter Bruchteil, beispielsweise die Hälfte oder ein Drittel, aller Behandlungsstationen verwendet werden. Alternativ können in diesem Fall auch die Behandlungsstationen alternierend also abwechselnd verwendet werden.

Weitere Merkmale und Vorteile der Erfindung werden nachfolgend anhand der beispielhaften Figuren erläutert. Dabei zeigt
- Figur 1: eine Illustration einer beispielhaften Blasmaschine;
- Figur 2: eine Illustration einer beispielhaften Blasmaschine mit einem Linearofen;
- Figur 3: eine Illustration einer Heizvorrichtung einer beispielhaften Blasmaschine;
- Figur 4: eine Illustration einer Transportvorrichtung durch eine beispielhafte Heizvorrichtung;
- Figur 5: eine Illustration einer Transportvorrichtung einer Heizvorrichtung einer beispielhaften Blasmaschine;
- Figur 6: eine Illustration einer beispielhaften Spritzblasmaschine;
- Figur 7: eine Illustration einer weiteren beispielhaften Spritzblasmaschine;
- Figur 8: eine Illustration einer beispielhaften Blasmaschine umfassend eine Sterilisationsvorrichtung;
- Figur 9: eine Illustration einer weiteren beispielhaften Blasmaschine umfassend eine Sterilisationsvorrichtung;
- Figur 10: eine Illustration einer weiteren beispielhaften Blasmaschine umfassend eine Sterilisationsvorrichtung;
- Figur 11: eine Illustration einer beispielhaften Blasmaschine umfassend eine Etikettiervorrichtung;
- Figur 12: ein beispielhaftes Transportelement einer Blasmaschine; und
- Figur 13: ein weiteres beispielhaftes Transportelement einer Blasmaschine.

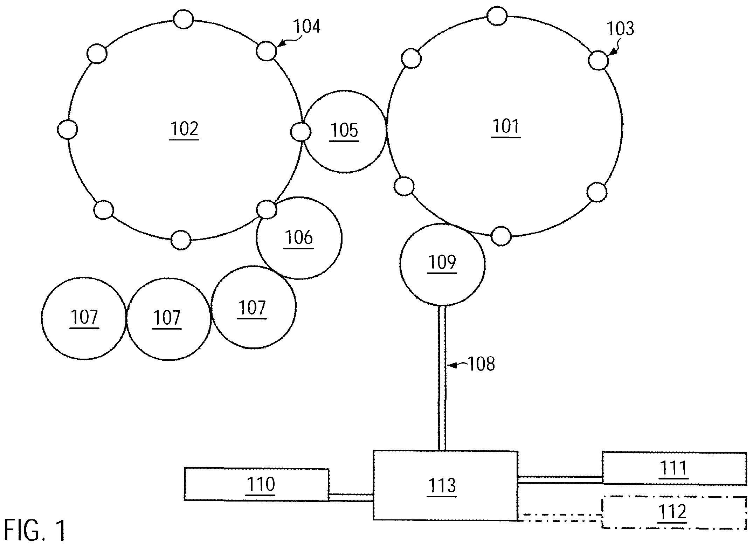

Figur 1 zeigt eine beispielhafte Blasmaschine mit einer Heizvorrichtung in Form eines Heizrads 101 und einem Blasrad 102. Das Heizrad 101 umfasst mehrere Heizelemente in Form von Heizkammern 103 zum Erwärmen der Vorformlinge. Das Blasrad 102 umfasst Blasstationen 104, in welchen die erwärmten Vorformlinge zu Kunststoffbehältern geblasen, insbesondere streckgeblasen werden. Die erwärmten Vorformlinge werden über ein Transferelement 105 vom Heizrad 101 an das Blasrad 102 übergeben. Über ein Auslaufelement 106 und mehrere Transferelemente 107 können die hergestellten Kunststoffbehälter beispielsweise an eine Füllvorrichtung und/oder eine Etikettiervorrichtung übergeben werden.

Die Vorformlinge werden über eine Zuführschiene 108 und ein Einlaufelement 109, beispielsweise einen Sägezahnstern, an das Heizrad 101 übergeben. Die Vorformlinge können insbesondere voneinander unterschiedliche Vorformlinge sein, welche beispielsweise aus unterschiedlichen Schütten, beispielsweise Schütten 110, 111 und 112, entnommen werden. Schütte 112 ist mit einer gestrichelten Linie gezeigt, was andeuten soll, dass diese Schütte optional ist. Die Blasmaschine kann aber auch mehr als drei Schütten umfassen.

Mittels eines Sortierelements 113 können die Vorformlinge in eine vorherbestimmte Reihenfolge gebracht werden und dann in dieser vorherbestimmten Reihenfolge ("just-in-sequence") über die Zuführschiene 108 und das Einlaufelement 109 in das Heizrad 101 eingebracht werden.

Die Blasstationen 104 des Blasrads 102 können unterschiedlich betrieben, insbesondere unterschiedlich ausgebildet und/oder gesteuert werden. Beispielsweise können Betriebsparameter von wenigstens zwei Blasstationen 104 des Blasrads 102 unterschiedlich sein. Die Betriebsparameter können beispielsweise Zeitpunkt und/oder Größe eines Vorblasdrucks, ein Fertigblasdruck, ein Vorblasbeginn (und/oder -ende), ein Spülbeginn, eine Temperatur des Vorformlings, eine Temperatur der Wand einer Blasform, eine Temperatur eines Formbodens, ein Zeitpunkt eines Spüldrucks, ein Druckverlauf beim Vorblasen, Fertigblasen und Spülen, eine Temperatur der Blasform und/oder ein Druckkissendruck sein.

Der Druckkissendruck kann insbesondere minimiert werden. Mit anderen Worten kann die benötigte Formenschließkraft auf die herzustellenden Behälter angepasst werden. Für kleinere Kunststoffflaschen kann beispielsweise weniger Druck notwendig sein, wodurch insbesondere eine Einsparung von Energie möglich sein kann.

Jede Blasstation 104 kann mit einem separat ansteuerbaren Ventilblock bestückt sein.

Wenigstens zwei Heizkammern 103 des Heizrads 101 können unterschiedlich betrieben, insbesondere unterschiedlich ausgebildet und/oder gesteuert werden. Beispielsweise können wenigstens zwei Heizkammern 103 voneinander unterschiedliche Temperaturen aufweisen. Bei dem Heizrad 101 kann es sich beispielsweise um einen Rundlaufofen mit daran angeordneten Heiztaschen oder Heizkammern 103 handeln.

Beispielsweise kann das Heizrad 101 ein STIR-Ofen sein. STIR (Selektiv-Transformiertes Infrarot) bedeutet, dass die Erwärmung der Vorformlinge durch selektive, transformierte Infrarotstrahlung durchgeführt wird. Hierbei werden die Vorformlinge in Heiztaschen eingebracht, die die Vorformlinge bis auf den Mündungsabschnitt im Wesentlichen vollumfänglich umgeben. In den Vorformling wird dabei ein Heizdorn eingebracht, der zumindest teilweise aus einer Funktionskeramik besteht, die die von außen eingebrachte Infrarotstrahlung, die durch den Vorformling transmittiert wird, in Strahlung mit einer anderen Wellenlänge umwandelt und auf den Vorformling zurückemittiert. Es können jedoch auch Heiztaschen zum Einsatz kommen, die auf dieses Prinzip verzichten.

Durch das Sortierelement 113 können die Vorformlinge in eine vorherbestimmte Reihenfolge gebracht werden, insbesondere derart, dass vorherbestimmte Vorformlinge vorherbestimmten Heizkammern 103 und/oder Blasstationen 104 zugeordnet werden.

Beispielsweise kann die beispielhafte Blasmaschine der Figur 1 verwendet werden, um vier voneinander unterschiedliche Kunststoffbehältertypen herzustellen. Dafür können insbesondere vier unterschiedliche Vorformlingstypen verwendet werden. Beispielsweise können zur Herstellung klarer Kunststoffbehälter klare Vorformlinge verwendet werden, zur Herstellung grüner Kunststoffbehälter grüne Vorformlinge, zur Herstellung blauer Kunststoffflaschen blaue Vorformlinge und zur Herstellung rötlicher Kunststoffflaschen rötliche Vorformlinge.

Vorformlinge dieser vier unterschiedlichen Vorformlingstypen können derart in die Blasmaschine eingebracht werden, dass jeder der Vorformlinge einer Heizkammer 103 und/oder einer Blasform 104 zugeordnet wird, welche an den Vorformling angepasst betrieben werden. Beispielsweise können Heizkammern 103 und/oder Blasstationen 104 für klare Vorformlinge anders ausgebildet und/oder gesteuert werden, als Heizkammern 103 und/oder Blasstationen 104 für grüne, blaue und/oder rötliche Vorformlinge. Beispielsweise kann jede vierte Behandlungsstation (Blasstation 104 und/oder Heizkammer 103) entlang des Blasrads 102 und/oder des Heizrads 101 denselben Kunststoffflaschentyp bearbeiten.

Die Vorformlinge können sich nicht nur in ihrer Farbe unterscheiden, die Vorformlinge können auch unterschiedliche Grammaturen, unterschiedliche geometrische Größen, unterschiedliche Wanddicken und/oder unterschiedliche Gewinde für unterschiedliche Verschlusstypen aufweisen. Die Blasstationen 104 können insbesondere unterschiedliche Blasformen für unterschiedliche Volumina, beispielsweise 0,33 Liter, 0,5 Liter, 0,75 Liter oder 1,0 Liter, aufweisen. Die Blasformen können auch unterschiedliche Geometrien aufweisen.

Die Blasmaschine kann unterschiedlich angeordnete Kurven umfassen, die Funktionen von Behandlungseinheiten, beispielsweise Heizkammern 103 und/oder Blasstationen 104, steuern. Die Kurven können in radialer Richtung und/oder in vertikaler Richtung unterschiedlich angeordnet sein.

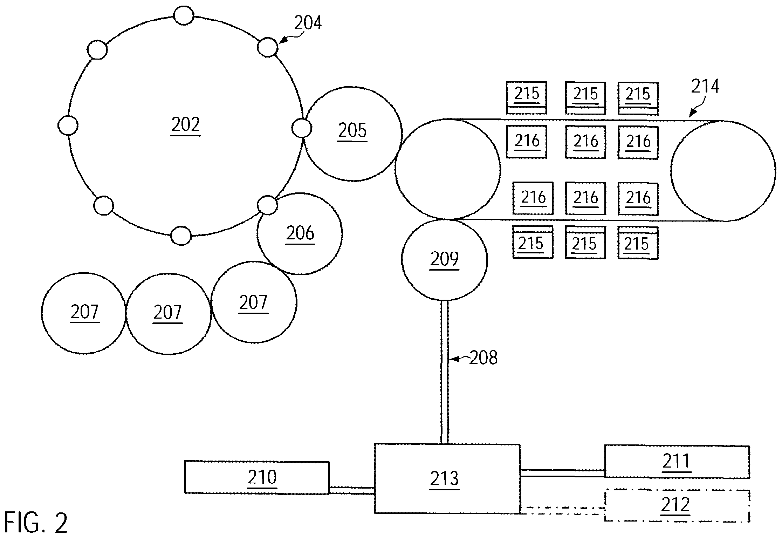

Beispielsweise kann ein Hub einer Bodenform von einer Blasstation 104 zur nächsten, eine Öffnungsbewegung einer Heizkammer 103 und/oder Blasstation 104 und/oder eine Eintauchtiefe eines Vorformlings in eine Heizkammer 103 variiert werden. Bei im Durchmesser kleinen Vorformlingen/Behältern muss der Formträger einer Heizkammer 103 und/oder Blasstation 104 nicht so weit aufgehen, wodurch Zeit eingespart werden kann und Verschleiß/Kräfte reduziert werden können. Falls ein Linearofen alternativ oder zusätzlich zu einem Heizrad verwendet wird, kann eine Höhe einer Transportvorrichtung durch den Linearofen variieren. Figur 2 zeigt eine weitere beispielhafte Blasmaschine. Die Blasmaschine weist ebenfalls ein Blasrad 202 mit mehreren Blasstationen 204 auf sowie ein Auslaufelement 206 und mehrere Transferelemente 207. Vorformlinge werden aus Schütten 210, 211 und/oder 212 mittels eines Sortierelements 213 über eine Zuführschiene 208 und ein Einlaufelement 209 in einen Linearofen eingebracht. Der Linearofen umfasst ein Transportelement 214 zum Transportieren der Vorformlinge durch den Linearofen sowie mehrere Heizkästen 215 mit vertikal angeordneten langgestreckten Infrarotstrahlern und mehreren Reflektoren 216.

Die Heizkästen können derart ausgebildet und/oder gesteuert werden, dass unterschiedliche Vorformlinge unterschiedliche erwärmt werden.

Anstelle von Infrarot - Heizelementen könnten auch Mikrowellen - Heizelemente vorgesehen sein. Diese ermöglichen auf effektive Art Vorformlinge selektiv, insbesondere unabhängig voneinander, zu erwärmen.

Die beispielhafte Blasmaschine kann eine Streckblasmaschine mit Servoreckfunktion sein. Alternativ können am Umfang des Blasrad 102 mehrere unterschiedliche Kurven vorgesehen sein, an denen Reckstangen mittels ihrer Kurvenfolger (Laufrollen) in ihrer Eintauchposition und/oder -geschwindigkeit gesteuert werden. So können mehrere Reckgeschwindigkeiten in einem Karussell der Blasmaschine verwirklicht werden.

Die Kurven können hierbei radial versetzt zueinander angeordnet sein, so dass beispielsweise die Reckstange jeder zweiten Blasstation an einer inneren Kurve abläuft, und die anderen Reckstangen an einer äußeren Kurve ablaufen.

Dieses Prinzip kann auch auf eine Steuerung einer oder mehrerer Abschirmvorrichtungen, beispielsweise Abschirmplatten, im Linearofen angewendet werden. Eine Abschirmplatte kann mittels eines Servo -, Piezo - oder Lineramotor betrieben werden. Eine Abschirmplatte dient als Barriere für die Wärmestrahlung und kann mit einem Vorformling durch den Linearofen bewegt werden.

Um eine vorherbestimmte Temperaturverteilung im Mündungsbereich eines Vorformlings zu steuern kann ein Zeitpunkt eines Hebens und/oder Senkens der Abschirmplatte für den Mündungsbereich geregelt werden. Insbesondere kann sich die Regelung für voneinander unterschiedliche Vorformlinge unterschiedlich sein.

Die Zeit, in der ein Bereich eines Vorformlings durch die Abschirmplatte geschützt wird kann gesteuert werden. Beispielsweise kann die Abschirmplatte vor Erreichen des Endes des Linearofens entfernt werden, sodass auch ein zuvor abgeschirmter Bereich des Vorformlings, beispielsweise ein Bereich direkt unterhalb eines Tragrings, für eine vorherbestimmte Zeit erwärmt wird.

Zu einer Regelung der Zeit, in der ein Bereich, beispielsweise der Mündungsbereich, des Vorformlings durch die Abschirmplatte geschützt wird, kann sich auch der Aufnahmedorn des Vorformlings heben und/oder senken.

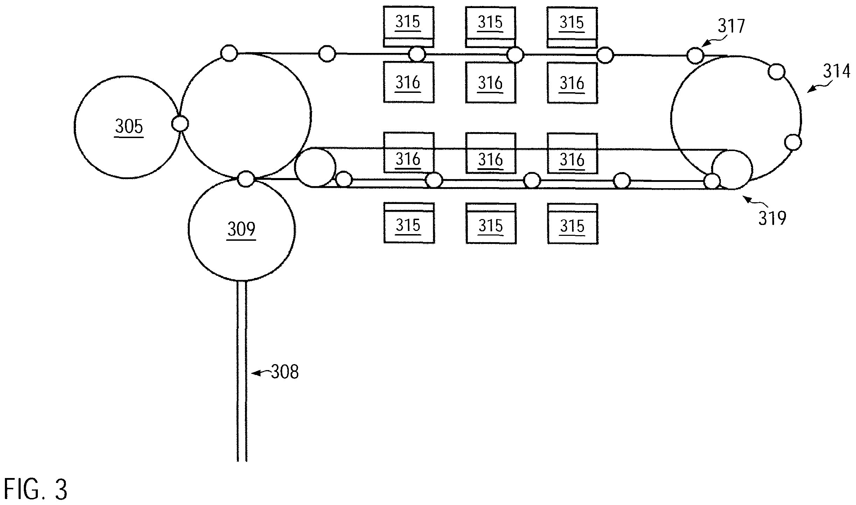

Figur 3 zeigt Details eines beispielhaften Linearofens für eine Blasmaschine. Über eine Zuführschiene 308 und ein Einlaufelement 309 können Vorformlinge in den Linearofen eingebracht werden. Mittels einer Transportvorrichtung 314 können die Vorformlinge durch den Linearofen bewegt werden. In Figur 3 sind mehrere beispielhafte Heizdornen 317 mit Vorformlingen gezeigt. Figur 3 zeigt außerdem einen Kettenantrieb 319 für die Drehung der Heizdornen. Außerdem sind mehrere Heizkästen 315 und Reflektoren 316 gezeigt.

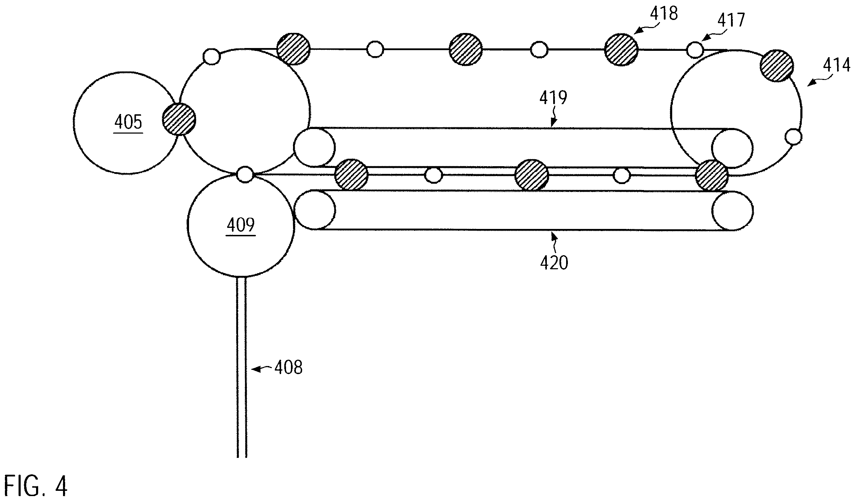

Figur 4 zeigt einen alternativen Linearofen für eine Blasmaschine. Die Vorformlinge werden über eine Zuführschiene 408 und ein Einlaufelement 409 in den Linearofen eingebracht. In Figur 4 sind die Heizkästen der Übersichtlichkeit halber nicht gezeigt. Die Vorformlinge können über ein Transportelement 414 durch den Linearofen bewegt werden. Eine oder mehrere Heizdorne 417 können mittels eines ersten Kettenantriebs 419 gedreht werden, während ein oder mehrere Heizdorne 418 mittels eines zweiten Kettenantriebs 420 gedreht werden können. Die zwei unterschiedlichen Kettenantriebe 419 beziehungsweise 420 können die Heizdornen 417, 418 insbesondere mit voneinander unterschiedlicher Geschwindigkeit drehen. Dadurch kann je nach Heizdorn eine unterschiedliche Erwärmung eines Vorformlings erreicht werden.

Die Kettenantriebe 419 beziehungsweise 420 können in unterschiedlicher Höhe angeordnet sein. Die Kettenantriebe 419 beziehungsweise 420 können auch in unterschiedlichem horizontalen Abstand zu den Heizelementen angeordnet sein. Verschieden große Zahnräder der Heizdornen 417, 418 können außerdem eine unterschiedliche Drehgeschwindigkeit bewirken. Damit kann ein Vorformling in Umfangsrichtung mit einem vorherbestimmten Temperaturprofil versehen werden. Voneinander unterschiedliche Vorformlinge können so insbesondere mit unterschiedlichen Temperaturprofilen versehen werden. Die Geschwindigkeiten der jeweiligen Kettenantriebe 419 beziehungsweise 420 können zur Profilierung über einen Erwärmungsvorgang eines Vorformlings hinweg variabel verändert werden.

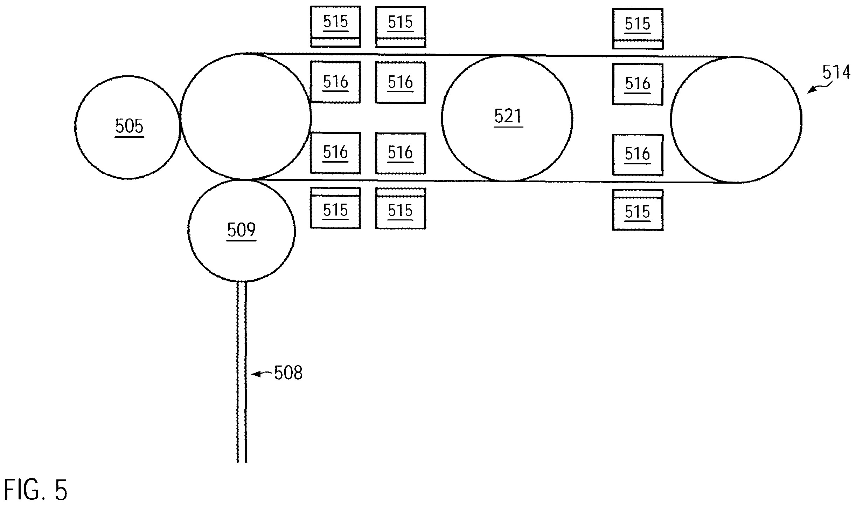

Figur 5 zeigt einen weiteren beispielhaften Linearofen für eine Blasmaschine. Das Transportelement 514, welches die Vorformlinge durch den Linearofen bewegt, umfasst ein Umlenkelement 521, welches es erlaubt, selektiv Vorformlinge über einen kürzeren Transportweg durch den Linearofen zu bewegen. Insbesondere zeigt die Figur 5 eine erste Gruppe von Heizkästen 515 und Reflektoren 516 und eine zweite Gruppe von Heizkästen 515 und Reflektoren 516, wobei das Umlenkelement 521 zwischen den beiden Gruppen angeordnet ist. Ein über die Zuführschiene 508 und Einlaufelement 509 in den Linearofen eingebrachter Vorformling kann nun wahlweise durch die erste und zweite Gruppe von Heizkästen 515 bewegt werden oder mittels des Umlenkelements 521 nur durch die erste Gruppe von Heizkästen 515. Mittels eines Transferelements 505 können die erwärmten Vorformlinge an ein Blasrad übergeben werden.

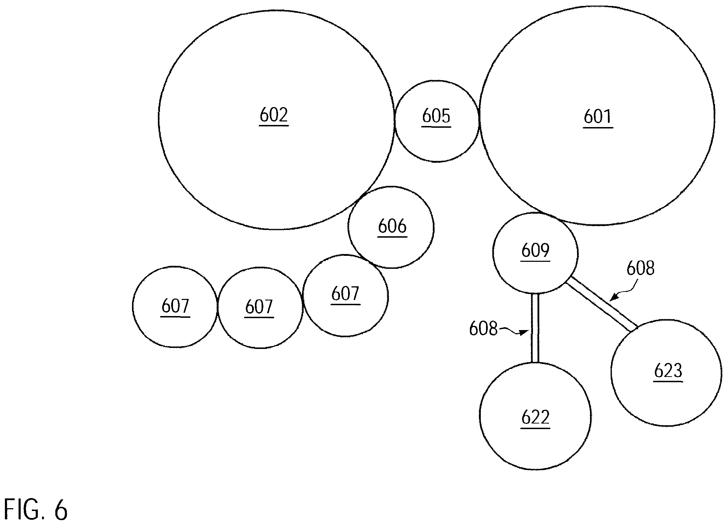

Figur 6 zeigt eine beispielhafte Blasmaschine, die als Spritzblasmaschine mit zwei Spritzmodulen 622 und 623 ausgebildet ist. Spritzmodul 622 kann beispielsweise eine erste Sorte oder Typ Vorformlinge spritzgießen und Spritzmodul 623 eine zweite Sorte Vorformlinge, die von der ersten Sorte Vorformlinge unterschiedlich ist. Die erste und zweite Sorte Vorformlinge können sich beispielsweise in Geometrie, Farbe, Wanddicke, Zusammensetzung und/oder im Gewinde für einen Verschluss unterscheiden. Die spritzgegossenen Vorformlinge können über Zuführschienen 608 und ein Einlaufelement 609 an ein Heizrad 601 übergeben werden. Mittels eines Transferelements 605 können die erwärmten Vorformlinge an ein Blasrad 602 übergeben werden, von welchem sie über ein Auslaufelement 606 und Transferelemente 607 beispielsweise an eine Füllvorrichtung und/oder eine Etikettiervorrichtung transportiert werden können.

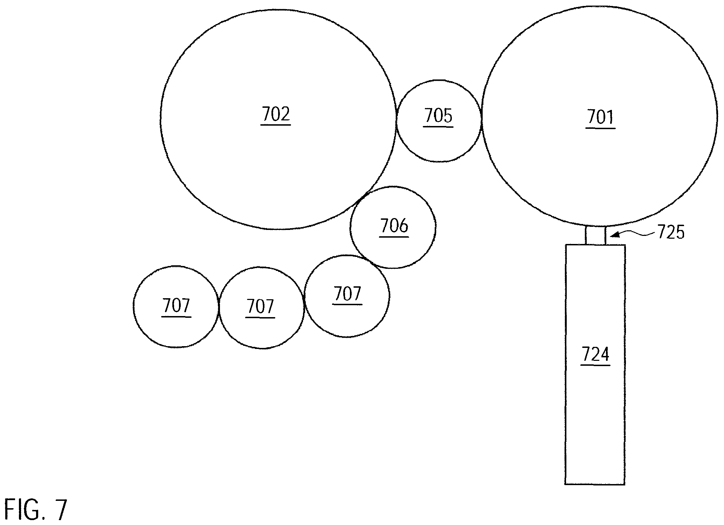

Figur 7 zeigt ein Beispiel einer Blasmaschine, in der die Vorformlinge mittels einer Formpressvorrichtung 724 formgepresst werden und über ein Transferelement 725 an ein Heizrad 701 übergeben werden. Die Formpressvorrichtung 724 kann derart betrieben werden, dass voneinander unterschiedliche Vorformlinge hergestellt werden. Über ein Transferelement 705 können die Vorformlinge vom Heizrad 701 an ein Blassrad 702 übergeben werden und danach über ein Auslaufelement 706 und Transferelemente 707 weiterbewegt werden.

Beim Formpressen (compression molding) kann die Menge an Kunststoff, die von einem Extruder abgegeben wird, gesteuert werden, um voneinander unterschiedliche Vorformlinge herzustellen.

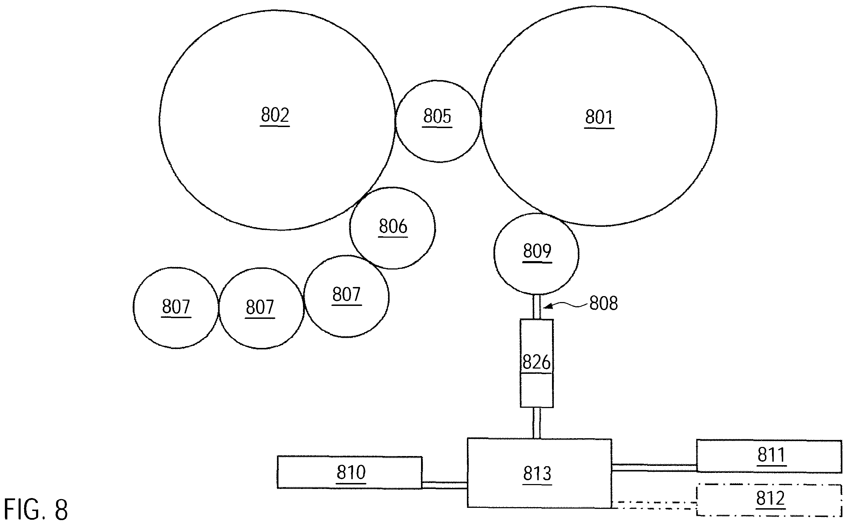

Figur 8 zeigt eine beispielhafte Blasmaschine, wobei in der Zuführschiene 808 ein Sterilisationselement 826 vorgesehen ist. Mit dem Sterilisationselement 826 können die in die Blasmaschine eingebrachten Vorformlinge sterilisiert werden. Die Sterilisationsvorrichtung 826 kann die Preforms mit Reinigungsflüssigkeit, ionisierter Luft und/oder Sterilluft behandeln. Hier können unterschiedlich tief eintauchende Lanzen (bis kurz vor den Boden der Vorformlinge) vorgesehen sein, die die Vorformlinge behandeln. Auch die Menge an Sterilisationsmedium kann bei unterschiedlichen Vorformlingen variieren. Alternativ können die Vorformlinge unterschiedlich tief in Tauchbäder zur Beschichtung und/oder zur Sterilisation eingetaucht werden. Die Sterilisationsvorrichtung 826 kann auch eine Plasmasterilisation oder -beschichtung durchführen, insbesondere welche die Vorformlinge unterschiedlich beschichtet.

Außerdem zeigt die Blasmaschine die bereits oben genannten Schütten 810, 811 und 812, ein Sortierelement 813, ein Einlaufelement 809, ein Heizrad 801, ein Transferelement 805, ein Blasrad 802, ein Auslaufelement 806 und Transferelemente 807.

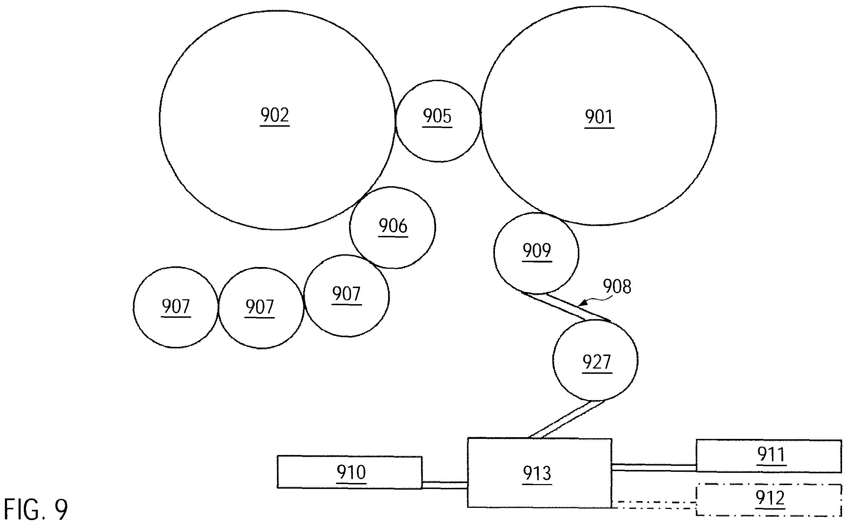

Figur 9 zeigt eine beispielhafte Blasmaschine mit einer Rundläufersterilisation 927 im Verlauf der Zuführschiene 908. Außerdem zeigt die Blasmaschine die bereits oben genannten Schütten 910, 911 und 912, ein Sortierelement 913, ein Einlaufelement 909, ein Heizrad 901, ein Transferelement 905, ein Blasrad 902, ein Auslaufelement 906 und Transferelemente 907.

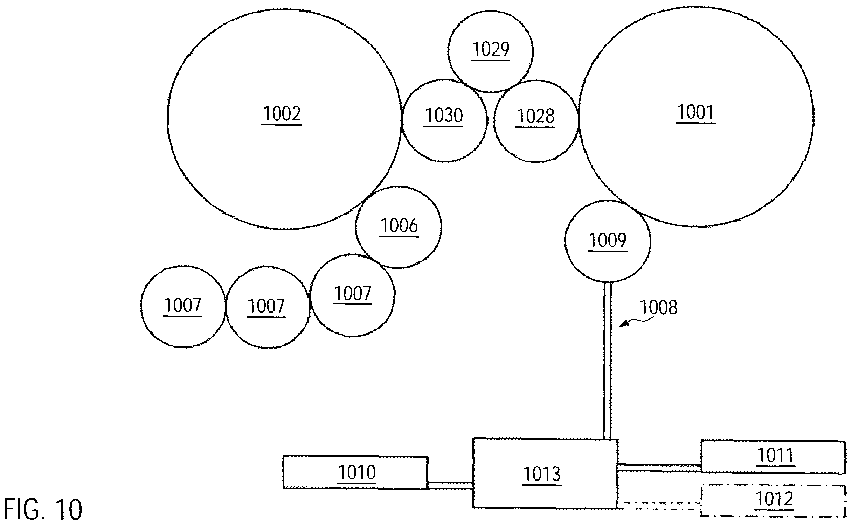

Figur 10 zeigt eine beispielhafte Blasmaschine, wobei eine Rundläufersterilisationsvorrichtung 1029 zwischen dem Heizrad 1001 und dem Blasrad 1002 angeordnet ist. Über ein Auslaufelement 1028 werden die Vorformlinge an die Sterilisationsvorrichtung 1029 übergeben und über ein Einlaufelement 1030 in das Blasrad 1002 geleitet. Figur 10 zeigt außerdem die bereits oben genannten Schütten 1010, 1011, 1012, Sortierelement 1013, Zuführschiene 1008, Einlaufelement 1009, Auslaufelement 1006 und Transferelemente 1007.

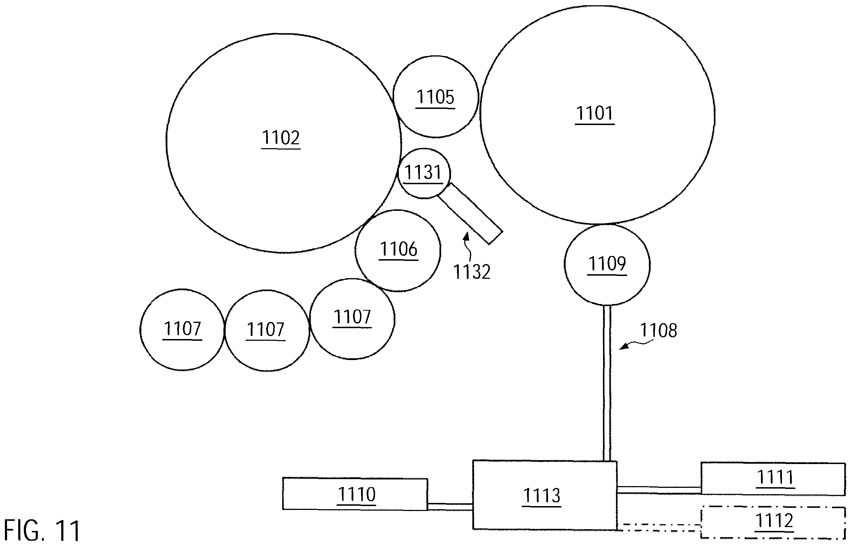

Figur 11 zeigt eine beispielhafte Blasmaschine, wobei die Blasmaschine eine Etikettiervorrichtung (Inmoldlabelling-Modul) umfasst. Die Etikettiervorrichtung umfasst ein Etikettieraggregat 1131 und eine Etikettenzuführung 1132. Mit der Etikettiervorrichtung können die im Blasrad 1102 hergestellten Kunststoffbehälter in der Blasmaschine etikettiert werden. Insbesondere können unterschiedliche Etiketten nacheinander in Blasformen eingebracht werden, gegen die sich die expandierenden Behälter beim Blasvorgang anlegen.

Figur 11 zeigt außerdem die Schütten 1110. 1111 und 1112, ein Sortierelement 1113, eine Zuführschiene 1108, ein Einlaufelement 1109, ein Heizrad 1101, ein Transferelement 1105, ein Blasrad 1102, ein Auslaufelement 1106 und Transferelemente 1107.

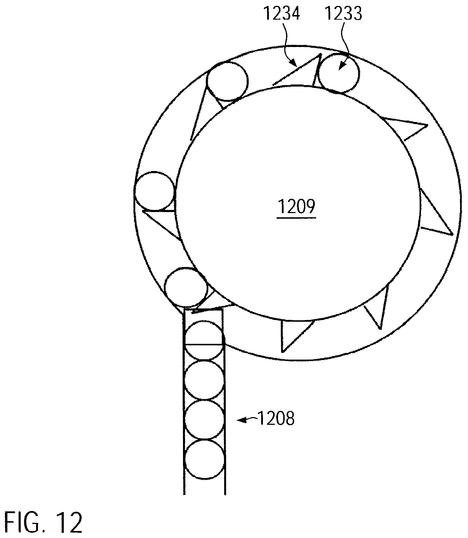

Figur 12 zeigt ein beispielhaftes Einlaufelement 1209 über welches beispielsweise Vorformlinge aus einer Zuführschiene 1208 in ein in Figur 12 nicht gezeigtes Heizrad oder einen Linearofen eingebracht werden können. Insbesondere ist das Einlaufelement 1209 in Figur 12 als Sägezahnstern ausgebildet, welches mehrere Zahnelemente 1234 zum Transportieren von Vorformlingen 1233 umfasst. Das in Figur 12 gezeigte Einlaufelement 1209 eignet sich zum Transport von Vorformlingen 1233 mit gleichem Mündung- oder Neckdurchmesser.

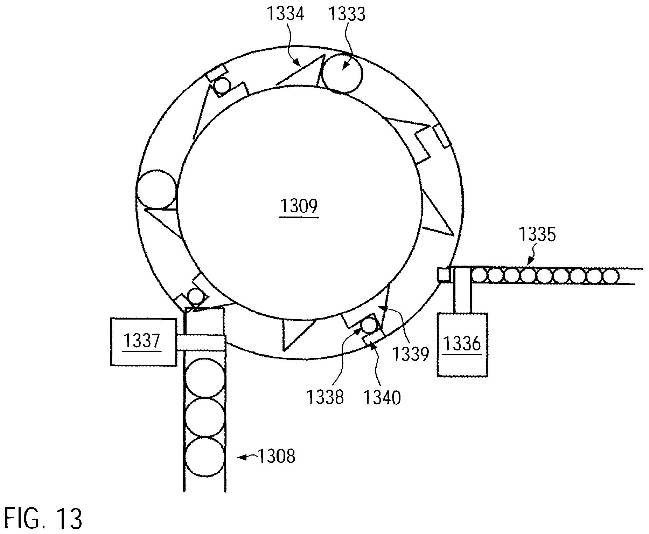

Figur 13 zeigt ein beispielhaftes Einlaufelement 1309 für eine Blasmaschine, das als Sägezahnstern ausgebildet ist und den Transport von Vorformlingen 1338 und 1333 mit unterschiedlichen Neckdurchmessern erlaubt. Insbesondere sind Zähne 1334 vorgesehen, welche Vorformlinge 1333 mit einem ersten Neckdurchmesser transportieren können und Zähne 1339, welche Vorformlinge 1338 mit einem zweiten Neckdurchmesser transportieren können. Die zweiten Vorformlinge 1338 können über eine zweite Zuführschiene 1335 zugeführt werden, während die Vorformlinge 1333 mit einem ersten Neckdurchmesser über eine erste Zuführschiene 1308 zugeführt werden. Stopper 1337 beziehungsweise 1336 können jeweils für die Zuführschiene 1308 beziehungsweise 1335 vorgesehen sein, um die Zuführung von Vorformlingen zu unterbrechen. Insbesondere können die Stopper 1337 beziehungsweise 1336 die Vorformlinge alternierend in das Einlaufelement 1309 einbringen.

Alternativ zu einem Einlaufelement 1309 könnten die Vorformlinge auch direkt von einem Heizdorn eines Heizrades oder eines Linearofens aus den Zuführschienen entnommen werden. Dies kann jedoch durch eine ungleichmäßige Ausrichtung oder Positionierung der Vorformlinge in den Zuführschienen erschwert werden.

Figur 13 zeigt außerdem ein Gegenelement 1340 zu den Sägezähnen 1339, welche eine genauere Positionierung der Vorformlinge 1338 ermöglicht.

Die oben beschriebenen Blasmaschinen können mit weiteren Maschinen einer Abfüllanlage, insbesondere einem Füller und/oder einer Etikettiervorrichtung, kombiniert, also verblockt, werden. Beispielsweise sind Blocksysteme in der Ausführung Streckblasmaschine - Etikettiervorrichtung - Füller oder in der Ausführung Streckblasmaschine - Füller - Etikettiervorrichtung möglich.

Die oben beschriebenen Blasmaschinen können außerdem eine Inspektionsvorrichtung zum automatischen Erkennen von Vorformlingen, insbesondere von in die Blasmaschine eingebrachten Vorformlingen, umfassen. Damit ist es beispielsweise auch möglich, Vorformlinge, die irrtümlich oder fälschlicherweise in die Blasmaschine eingebracht werden, zu erfassen.

Mit Hilfe der Inspektionsvorrichtung können auch unterschiedliche Preforms, die zufällig oder ungeordnet in die Blasmaschine eingebracht werden, beispielsweise aus einer Schütte entnommene Vorformlinge, verarbeitet werden. Dafür kann die Inspektionsvorrichtung derart ausgebildet und/oder konfiguriert sein, dass ein Sensor der Inspektionsvorrichtung einen Vorformling erkennt, insbesondere durch Erkennen wenigstens einer physikalischen, chemischen und/oder geometrischen Eigenschaft des Vorformlings, und den Heiz-, Sterilisations- und/oder Blasprozess auf den erkannten Vorformling anpasst. Dies kann ein Einstellen eines Behandlungsparameters des Heiz-, Sterilisations- und/oder Blasprozesses umfassen. Beispielsweise könnte ein Hub einer Blasdüse, eine Reckgeschwindigkeit oder ein Öffnungswinkel oder - abstand der Blasformen angepasst werden. Die oben beschriebenen Blasmaschinen können außerdem eine Zuordnungseinrichtung oder Verteileinrichtung umfassen, die einen erkannten Vorformling einer vorherbestimmten Behandlungseinheit zuordnet.

Außerdem kann die Inspektionsvorrichtung konfiguriert und/oder ausgebildet sein, um ein Verfahren durchzuführen, umfassend die Schritte Erfassen eines Vorformlings, der in die Blasmaschine eingebracht wird, Bestimmen, ob der Vorformling für die Bearbeitung in der Blasmaschine geeignet ist, und wenn bestimmt wird, dass der Vorformling nicht für die Bearbeitung in der Blasmaschine geeignet ist, Anhalten der Produktion von Kunststoffbehältern und/oder Ausgeben einer Warnmeldung.

Es können mehrere Schütten für Vorformlinge vorgesehen sein, wobei wenigstens zwei der Schütten voneinander unterschiedliche Vorformlinge, also unterschiedliche Vorformlingstypen, aufweisen. Nach einem Ganiturenwechsel kann die Blasmaschine, insbesondere eine Sortiervorrichtung der Blasmaschine, automatisch auf eine oder mehrere Schütten oder Lagerplätze zugreifen, insbesondere wenn ein bestimmter Produktionsauftrag (Rezept) gewählt wird und/oder wenn durch eine Erkennung einer Blasform ein Rückschluss auf einen oder mehrere benötigte Vorformlinge möglich ist.

Bei einer Spritzblasmaschine können ein Wechsel der Formen für das Spritzgießen und ein Wechsel der Blasformen synchron durchgeführt werden, insbesondere durch eine Eingabe eines Produktionsauftrags oder durch Wahl wenigstens einer Blasform.

Die chemische Zusammensetzung wenigstens eines Vorformlings kann gesteuert werden. Ebenso können bei einem Puffer zwischen Blasmaschine und Spritzmaschine einer Spritzblasmaschine Pufferzeiten zum Auskühlen gesteuert werden. Dies kann insbesondere über eine Geschwindigkeitsregelung der Spritzmaschine geschehen.

In einer Spritzblasmaschine kann mit einer solchen Steuerung ein optimales Verhältnis ("breakeven-point") zwischen einem Anteil eines Infrarot-Absorbers und einem Anteil an Heizleistung ermittelt und die Spritzblasmaschine so betrieben werden.

Auch eine Steuerung in Bezug auf die Flaschenqualität und/oder die chemische Materialzusammensetzung ist möglich.

Es kann auch die Infrarot-Absorberkonzentration in unterschiedlichen Heizzonen eines Vorformlings variiert werden, insbesondere basierend auf einem Vergleich von Eingangswerten, beispielsweise Messungen eines neunfach-Pyrometers oder einer Wanddickenmessung in den Heizzonen, mit den Werten einer Infrarot-Absorptionsmessung.

Es versteht sich, dass in den zuvor beschriebenen Ausführungsbeispielen genannte Merkmale nicht auf diese speziellen Kombinationen beschränkt sind und auch in beliebigen andern Kombinationen möglich sind, solange die entsprechende Merkmalskombination im Einklang mit den folgenden Ansprüchen ist.

## Patentansprüche

1. Verfahren zum Herstellen von Kunststoffbehältern mittels einer Blasmaschine, wobei die Blasmaschine derart betrieben wird, dass wenigstens zwei voneinander unterschiedliche Kunststoffbehälter innerhalb eines Produktionsdurchlaufs aus der Blasmaschine ausgebracht werden, wobei die wenigstens zwei voneinander unterschiedliche Kunststoffbehälter aus Vorformlingen (1233, 1333, 1338) hergestellt werden, wobei eine Heizvorrichtung (101; 601; 701; 801; 901; 1001; 1101) der Blasmaschine derart gesteuert wird, dass die Vorformlinge vor einem Blasvorgang auf unterschiedliche Temperaturen erwärmt werden, wobei die Vorformlinge auf wenigstens teilweise unterschiedlichen Transportstrecken (514) durch die Blasmaschine bewegt werden **dadurch gekennzeichnet, dass** das Verfahren ein automatisches Erkennen von Vorformlingen umfasst, wobei das automatische Erkennen ein Erfassen wenigstens einer physikalischen Eigenschaft eines Vorformlings umfasst, und wobei der Wert wenigstens eines Behandlungsparameters entsprechend dem erkannten Vorformling gewählt wird, und die Blasmaschine derart betrieben wird, dass der erkannte Vorformling in der Blasmaschine mit dem gewählten Behandlungsparameterwert behandelt wird, wobei die Vorformlinge (1233, 1333, 1338) unterschiedlich schnell durch die Blasmaschine bewegt werden.

2. Verfahren nach Anspruch 1, wobei die wenigstens zwei voneinander unterschiedlichen Kunststoffbehälter aus gleichartigen Vorformlingen (1233, 1333, 1338) hergestellt werden.

3. Verfahren nach Anspruch 1 oder 2, wobei die Vorformlinge voneinander unterschiedlichen Behandlungseinheiten zugeordnet werden.

4. Verfahren nach Anspruch 3, wobei die Blasmaschine wenigstens zwei Blasstationen (104; 204) umfasst, wobei die Blasmaschine derart gesteuert wird, dass die Vorformlinge voneinander unterschiedlichen Blasstationen (104; 204) zugeordnet werden.

5. Verfahren nach einem der Ansprüche 1 - 4, wobei die Vorformlinge (1233, 1333, 1338) in einer vorherbestimmten Reihenfolge in die Blasmaschine eingebracht werden.

6. Verfahren nach einem der Ansprüche 1 - 5, außerdem umfassend ein automatisches Erkennen unterschiedlicher Vorformlinge.

7. Verfahren nach Anspruch 6, wobei die unterschiedlichen Vorformlinge (1233, 1333, 1338) basierend auf einem Ergebnis des automatischen Erkennens in die Blasmaschine eingebracht werden.

8. Verfahren nach einem der Ansprüche 1 - 7, außerdem umfassend Herstellen der Vorformlinge, insbesondere durch Spritzgießen.

9. Verfahren nach einem der Ansprüche 1 - 7, außerdem umfassend ein Sterilisieren der Vorformlinge, insbesondere wobei sich der Sterilisationsprozess für unterschiedliche Vorformlinge unterscheidet.

10. Verfahren nach einem der Ansprüche 1 - 9, umfassend:
Erfassen eines Vorformlings, der in die Blasmaschine eingebracht wird;
Bestimmen, ob der Vorformling (1233, 1333, 1338) für die Bearbeitung in der Blasmaschine geeignet ist; und wenn bestimmt wird, dass der Vorformling (1233, 1333, 1338) nicht für die Bearbeitung in der Blasmaschine geeignet ist:
Anhalten der Produktion von Kunststoffbehältern; und/oder Ausgeben einer Warnmeldung, insbesondere an eine Bedienperson und/oder
Auswerfen des Vorformlings; und
wenn bestimmt wird, dass der Vorformling (1233, 1333, 1338) für die Bearbeitung in der Blasmaschine geeignet ist:
Erzeugen eines Signals an eine Steuerungseinrichtung der Blasmaschine, dass die Bearbeitung des Vorformlings (1233, 1333, 1338) in der Blasmaschine stattfinden kann und/oder
Festlegen mindestens eines Behandlungsparameters in der Blasmaschine mit dem der Vorformling (1233, 1333, 1338) behandelt wird.

## Claims

1. Method of manufacturing plastic containers by means of a blow molding machine, wherein the blow molding machine is operated such that at least two different plastic containers are output from the blow molding machine within one production cycle, wherein the at least two different plastic containers are manufactured from preforms (1233, 1333, 1338), wherein a heating device (101; 601; 701; 801; 901; 1001; 1101) of the blow molding machine is controlled such that the preforms are heated to different temperatures before a blow molding process, wherein the preforms are moved through the blow molding machine on at least partially different transport sections (514), **characterized in that** the method comprises automatic detection of preforms, wherein automatic detection comprises identifying at least a physical property of a preform, and wherein the value of at least one treatment parameter is selected corresponding to the detected preform, and the blow molding machine is operated such that the detected preform is treated in the blow molding machine with the selected treatment parameter value, wherein the preforms (1233, 1333, 1338) are moved through the blow molding machine at different speeds.

2. Method according to claim 1, wherein the at least two different plastic containers are manufactured from preforms (1233, 1333, 1338) of the same kind.

3. Method according to claim 1 or 2, wherein the preforms are allocated to different treatment units.

4. Method according to claim 3, wherein the blow molding machine comprises at least two blow molding stations (104; 204), wherein the blow molding machine is controlled such that the preforms are allocated to different blow molding stations (104; 204).

5. Method according to one of claims 1 - 4, wherein the preforms (1233, 1333, 1338) are introduced into the blow molding machine in a predetermined sequence.

6. Method according to one of claims 1 - 5, moreover comprising automatic detection of different preforms.

7. Method according to claim 6, wherein the different preforms (1233, 1333, 1338) are introduced into the blow molding machine based on a result of the automatic detection.

8. Method according to one of claims 1 - 7, moreover comprising the manufacture of the preforms, in particular by injection molding.

9. Method according to one of claims 1 - 7, moreover comprising sterilization of the preforms, in particular wherein the sterilization process for different preforms differs.

10. Method according to one of claims 1 - 9, comprising:
detecting a preform which is introduced into the blow molding machine;
determining whether the preform (1233, 1333, 1338) is suited for being processed in the blow molding machine; and if it is determined that the preform (1233, 1333, 1338) is not suited for being processed in the blow molding machine:
stopping the production of plastic containers; and/or emitting a warning message, in particular to an operator and/or
ejecting the preform; and
if it is determined that the preform (1233, 1333, 1338) is suited for being processed in the blow molding machine:
generating a signal to a control means of the blow molding machine indicating that the processing of the preform (1233, 1333, 1338) can take place in the blow molding machine, and/or
determining at least one treatment parameter in the blow molding machine with which the preform (1233, 1333, 1338) is treated.

## Revendications

1. Procédé de fabrication de contenants en matière plastique au moyen d'une machine de moulage par soufflage, d'après lequel on fait fonctionner la machine de moulage par soufflage de manière telle que la machine de moulage par soufflage produise au moins deux contenants en matière plastique différents l'un de l'autre au cours d'un seul cycle de production, lesdits au moins deux contenants en matière plastique différents l'un de l'autre étant fabriqués à partir de préformes (1233, 1333, 1338), d'après lequel un dispositif de chauffage (101; 601; 701; 801; 901; 1001; 1101) de la machine de moulage par soufflage est commandé de façon à échauffer les préformes à des températures différentes avant l'opération de soufflage, d'après lequel les préformes sont déplacées à travers la machine de moulage par soufflage, sur des parcours de transport (514) au moins partiellement différents, **caractérisé en ce que** le procédé comprend une reconnaissance automatique de préformes, d'après lequel la reconnaissance automatique comprend la détection d'au moins une propriété physique d'une préforme, et d'après lequel la valeur d'au moins un paramètre de traitement est sélectionnée en fonction de la préforme reconnue, et on fait fonctionner la machine de moulage par soufflage de manière telle que la préforme reconnue soit traitée dans la machine de moulage par soufflage avec la valeur de paramètre de traitement sélectionnée, d'après lequel les préformes (1233, 1333, 1338) sont déplacées selon une vitesse différente à travers la machine de moulage par soufflage.

2. Procédé selon la revendication 1, d'après lequel lesdits au moins deux contenants en matière plastique sont fabriqués à partir de préformes (1233, 1333, 1338) de même type.

3. Procédé selon la revendication 1 ou la revendication 2, d'après lequel les préformes sont affectées à des unités de traitement mutuellement différentes.

4. Procédé selon la revendication 3, d'après lequel la machine de moulage par soufflage comprend au moins deux postes de moulage par soufflage (104; 204), et d'après lequel on commande la machine de moulage par soufflage de manière telle que les préformes soient affectées à des postes de moulage par soufflage (104; 204) mutuellement différents.

5. Procédé selon l'une des revendications 1 - 4, d'après lequel les préformes (1233, 1333, 1338) sont introduites dans la machine de moulage par soufflage selon un ordre prédéterminé à l'avance.

6. Procédé selon l'une des revendications 1 - 5, comprenant, en outre, une reconnaissance automatique de préformes différentes.

7. Procédé selon la revendication 6, d'après lequel les préformes (1233, 1333, 1338) différentes sont introduites dans la machine de moulage par soufflage, en se basant sur un résultat de la reconnaissance automatique.

8. Procédé selon l'une des revendications 1 - 7, comprenant, en outre, la fabrication des préformes, notamment par moulage par injection.

9. Procédé selon l'une des revendications 1 - 7, comprenant, en outre, une stérilisation des préformes, et d'après lequel le processus de stérilisation pour des préformes différentes est notamment différent.

10. Procédé selon l'une des revendications 1 - 9, comprenant les opérations consistant à :
effectuer le relevé d'une préforme, qui est introduite dans la machine de moulage par soufflage ;
déterminer si la préforme (1233, 1333, 1338) est adaptée au traitement dans la machine de moulage par soufflage ; et
si l'on détermine que la préforme (1233, 1333, 1338) n'est pas adaptée au traitement dans la machine de moulage par soufflage :
arrêt de la production de contenants en matière plastique ; et/ou
délivrance un message d'alerte, notamment à une personne de service ; et/ou
éjection de la préforme ; et
si l'on détermine que la préforme (1233, 1333, 1338) est adaptée à être traitée dans la machine de moulage par soufflage :
élaboration d'un signal vers un dispositif de commande de la machine de moulage par soufflage, indiquant que le traitement de la préforme (1233, 1333, 1338) peut être effectué dans la machine de moulage par soufflage, et/ou
fixation d'au moins un paramètre de traitement dans la machine de moulage par soufflage, à l'aide duquel va être traitée la préforme (1233, 1333, 1338).
